# EUROPÄISCHE PATENTSCHRIFT

(11) **EP 2 669 074 B1**
(45) Veröffentlichungstag und Bekanntmachung des Hinweises auf die Patenterteilung: **04.04.2018**
(21) Anmeldenummer: 13168045.6
(22) Anmeldetag: 16.05.2013
(51) Int. Cl.: B29C 69/00, B29D 23/00, F16L 47/28, F16L 47/32, B29C 45/14, B29C 49/04, B29C 65/58, B29L 31/24

(54) **Hohlkörperverbindung mit zwei Hohlkörpern, die mittels eines Blasformverfahrens hergestellt sind**
Hollow body connection with two hollow bodies manufactured by a blow-moulding process
Liaison de corps creux avec deux corps creux réalisés par un procédé de soufflage

(30) Priorität: 28.05.2012 DE 102012010363
(43) Veröffentlichungstag der Anmeldung: 04.12.2013
(73) Patentinhaber: Etimex Technical Components GmbH, 89616 Rottenacker (DE)
(72) Erfinder: Boden, Axel, 89584 Ehingen (DE); Dörfl, Manfred, 89604 Allmendingen (DE); Holstein, Klaus-Peter, 88471 Laupheim (DE)
(74) Vertreter: Rothkopf, Ferdinand

(56) Entgegenhaltungen:
- DE-U1-202009 011 641

## Beschreibung

Die Erfindung betrifft eine Hohlkörperverbindung mit einem ersten Hohlkörper, der mittels eines Blasformverfahrens hergestellt ist, und einem zweiten Hohlkörper, der ebenfalls mittels eines Blasformverfahrens hergestellt ist.

Das Blasformen ist ein Sammelbegriff für die Herstellung von Hohlkörpern wie Flaschen und Kanister aus thermoplastischen Kunststoffen. Man unterscheidet in Extrusionsblasformen, Spritzblasformen und Tauchblasformen. Dabei wird kontinuierlich oder auch diskontinuierlich ein Schlauch aus heißem, formbarem Kunststoff als Vorformling senkrecht nach unten ausgestoßen (extrudiert). Anschließend fährt ein Dorn von oben oder unten in den Schlauch ein. Eine zu diesem Zeitpunkt noch geöffnete, zweigeteilte Form fährt zu und umhüllt den Schlauch mitsamt dem Dorn. Durch den Dorn wird sodann Druckluft in den Schlauch gepresst, womit dieser aufgeblasen und von innen an die Form angepresst und abgekühlt wird. Der Kunststoff passt sich so der vorgegebenen Form an und wird fest.

Ein Vorteil des Blasformens ist, dass dreidimensionale Hohlkörper mit einfachen Werkzeugen herstellbar sind. Ferner können gerade Hohlkörper bzw. Hohlteile sehr kostengünstig und selbst mehrschichtig hergestellt werden. Dabei können die Wanddicken variiert werden.

Die Verwendung von Blasformverfahren ist immer gerade dann von Vorteil, wenn vergleichsweise großvolumige Hohlkörper in sehr großer Stückzahl kostengünstig hergestellt werden sollen.

Aus DE 20 2009 011 641 U1 ist ein Kunststoffrohr bekannt, das zum Anschluss an eine durch einen Rand definierte Öffnung eines Luftkastens mit einem im 2K-Verfahren hergestellten, umlaufenden Dichtelement aus einer elastomeren Weichkomponente versehen ist. Das Kunststoffrohr ist dabei im Spritzgießverfahren oder im Blasformverfahren hergestellt. Der Luftkasten ist soweit erkennbar wohl aus Metallblech hergestellt.

### Zugrundeliegende Aufgabe

Der Erfindung liegt die Aufgabe zugrunde, eine Methode anzugeben, mittels der zumindest zwei blasgeformte Hohlkörper auf kostengünstige Weise insbesondere fluiddicht miteinander verbunden werden können.

### Erfindungsgemäße Lösung

Diese Aufgabe ist erfindungsgemäß mit einer Hohlkörperverbindung mit einem ersten Hohlkörper gelöst, der mittels eines Blasformverfahrens hergestellt ist, und einem zweiten Hohlkörper, der ebenfalls mittels eines Blasformverfahrens hergestellt ist, wobei ein die beiden Hohlkörper verbindender Verbindungskörper vorgesehen ist, der mittels eines Spritzgießverfahrens hergestellt ist. Der spritzgegossene Verbindungskörper ist an dem ersten Hohlkörper stoffschlüssig oder kraftschlüssig angekoppelt und an dem zweiten Hohlkörper formschlüssig angekoppelt.

Kraftschlüssige Kopplungen bzw. Verbindungen setzen eine Normalkraft auf die miteinander zu verbindenden Flächen voraus. Die gegenseitige Verschiebung der Flächen ist verhindert, solange die durch die Haftreibung bewirkte Gegenkraft nicht überschritten wird. Der Kraftschluss beziehungsweise Reibschluss wäre erst dann verloren und die Flächen würden aufeinander rutschen, wenn die tangential wirkende Lastkraft größer als die Haftreibungskraft wäre. Stoffschlüssige Kopplungen bzw. Verbindungen werden alle Verbindungen genannt, bei denen die Verbindungspartner durch atomare oder molekulare Kräfte zusammengehalten werden. Sie sind gleichzeitig nicht lösbare Verbindungen, die sich nur durch Zerstörung der Verbindungsmittel trennen lassen. Bei einer formschlüssigen Kopplung bzw. Verbindung ist einer der Verbindungspartner einem anderen im Weg. Bei Betriebsbelastung wirken Druckkräfte normal, das heißt rechtwinklig zu den Flächen der Verbindungspartner. Solche "Sperrungen" kommen in mindestens einer Richtung vor.

Beim Spritzgießen wird mit einer Spritzgießmaschine der jeweilige Werkstoff, meist Kunststoff, in einer Spritzgießeinheit plastifiziert und in ein Spritzgießwerkzeug eingespritzt. Der Hohlraum, die Kavität, des Spritzgießwerkzeugs bestimmt die Form und die Oberflächenstruktur des fertigen Körpers bzw. Teiles. Dabei kann die Oberfläche des Teiles nahezu frei, je nach Anforderung, gewählt werden. Mit Spritzgießen lassen sich Körper mit hoher Genauigkeit herstellen.

Mit dem erfindungsgemäßen, spritzgegossenen Verbindungskörper ist auf kostengünstige Weise eine präzise und ggf. fluiddichte Verbindung zwischen zwei blasgeformten Hohlkörpern möglich. Dabei macht sich die Erfindung zu nutze, dass mittels Spritzgießen an dem Verbindungskörper verschiedene Funktionsbereiche sehr vorteilhaft ausgebildet werden können. So sieht die Erfindung einen ersten Funktionsbereich vor, an dem einer der Hohlkörper von dem Verbindungskörper formschlüssig umgriffen ist. Die Verbindung zwischen dem Verbindungskörper und dem ersten Hohlkörper kann auch an der Innenseite des Hohlkörpers erfolgen. Dadurch kann auch eine Stützfunktion erreicht werden. Ferner sieht die Erfindung einen zweiten Funktionsbereich vor, an dem der andere Hohlkörper von dem Verbindungskörper kraftschlüssig umgriffen ist. Beide Verbindungsarten können in der Herstellung des Verbindungskörpers mittels Spritzgießen an diesem, durch entsprechende Wahl des Spritzgießwerkzeugs und der Spritzgießparameter, vorteilhaft hergestellt werden. Nachfolgend können diese Funktionsbereiche genutzt werden, um die beiden Hohlkörper, die zuvor kostengünstig geblasen worden sind, für die geforderte Anwendung über ihre Lebensdauer hinweg miteinander zu verbinden.

Bevorzugt sind der erste und der zweite Hohlkörper jeweils als ein blasgeformtes Rohr hergestellt. Die erfindungsgemäße Methode ist besonders vorteilhaft zum Verbinden von Rohren geeignet. Solche Rohre wären sonst nur einzeln mittels Spritzgießen vergleichsweise kostenaufwendig herstellbar. Für das Spritzgießen wären insbesondere vergleichsweise große und teure Spritzgießwerkzeuge und Spritzgießmaschinen erforderlich. Eine Gesamtanordnung von Rohren wäre allein mittels Blasformen ebenfalls nur kostenaufwendig möglich, weil viel Verschnittmaterial entstehen würde.

Mittels des erfindungsgemäßen Verbindungskörpers ist der erste, rohrförmige Hohlkörper mit seiner Stirnseite an der Längsseite des zweiten, rohrförmigen Hohlkörpers besonders vorteilhaft angekoppelt. Auf diese Weise ist mit der erfindungsgemäßen Lösung eine Rohrabzweigung sehr vorteilhaft herstellbar.

Die stoffschlüssige oder kraftschlüssige Verbindung zwischen dem ersten Hohlkörper und dem Verbindungskörper ist vorzugsweise mittels Anspritzen des Verbindungskörpers an den ersten Hohlkörper hergestellt. Beim Anspritzen wird der erste Hohlkörper in eine Spritzgussform eingelegt und nachfolgend wird in einem Spritzgießverfahren der Verbindungskörper an den ersten Hohlkörper angeformt. Das derartige Anspritzen gemäß der Erfindung schafft auf kostengünstige Weise eine Ankoppelung zum ersten blasgeformten Hohlkörper. Die Ankopplung kann vorteilhaft sowohl dicht sein als auch vergleichsweise hohe Kräfte übertragen.

Die formschlüssige Verbindung zwischen dem zweiten Hohlkörper und dem Verbindungskörper ist erfindungsgemäß mittels mindestens einer Rastverbindung hergestellt. Dabei ist der erste Hohlkörper mittels der Rastverbindung leicht am zweiten Hohlkörper zu montieren.

Die Rastverbindung ist erfindungsgemäß mit mindestens einer vom zweiten Hohlkörper gebildeten Raste und einer zugehörigen, vom Verbindungskörper gebildeten Lasche gebildet. Vorzugsweise sind mehrere Rasten vorgesehen, die insbesondere um den Umfang des Verbindungskörpers herum, beabstandet voneinander, angeordnet sind. Die mindestens eine Raste kann im Blasformverfahren weitgehend kostenneutral und dennoch mit der erforderlichen Maßgenauigkeit hergestellt werden. Die zugehörige Lasche kann im Spritzgießverfahren ebenfalls sehr vorteilhaft hergestellt werden. Vorzugsweise sind vier Rastverbindungen mit je einer Raste und einer Lasche vorgesehen. Die Laschen umgreifen vorzugsweise den zweiten Hohlkörper, so dass dieser, wenn er als Rohr gestaltet ist, z.B. seitlich gegriffen wird. Die Laschen sind dabei vorzugsweise federnd gestaltet.

An dem zweiten Hohlkörper ist vorteilhaft mindestens eine erste Anlagefläche und an dem Verbindungskörper eine zugehörige zweite Anlagefläche zum Aufnehmen eines an dem ersten Hohlkörper wirkenden Torsionsmoments vorgesehen. Mit den derartig aneinander anliegenden Fläche kann insbesondere ein Verdrehen der Hohlkörper gegeneinander abgesichert werden. Vorzugsweise sind zwei am Verbindungskörper diametral gegenüberliegende Paare von erster und zweiter Anlagefläche vorgesehen. Die derartige Paarung stellt sicher, dass die Hohlkörper beim Angreifen von Drehkräften nicht ausweichen.

Gemäß der Erfindung ist ferner ein Verfahren zum Herstellen einer Hohlkörperverbindung mit folgenden Schritten geschaffen: Blasformen eines ersten Hohlkörpers, Blasformen eines zweiten Hohlkörpers, sowie Spritzgießen eines Verbindungskörpers mit einem Ausbilden einer stoffschlüssigen oder kraftschlüssigen Verbindung zwischen dem ersten Hohlkörper und dem Verbindungskörper und Ausbilden einer formschlüssigen Verbindung zwischen dem Verbindungskörper samt daran gekoppeltem ersten Hohlkörper und dem zweiten Hohlkörper.

Mit dem spritzgegossenen Verbindungskörper ist, wie oben bereits erläutert, auf kostengünstige Weise eine präzise und ggf. fluiddichte Verbindung zwischen zwei blasgeformten Hohlkörpern möglich.

Die stoffschlüssige oder kraftschlüssige Verbindung wird, entsprechend den obigen Ausführungen, zwischen dem ersten Hohlkörper und dem Verbindungskörper mittels eines Anspritzens des Verbindungskörpers an den ersten Hohlkörper ausgebildet.

Ferner wird die formschlüssige Verbindung erfindungsgemäß zwischen dem zweiten Hohlkörper und dem Verbindungskörper mittels einer Rastverbindung hergestellt, von der eine Raste mittels des Blasformens des zweiten Hohlkörpers und eine Lasche mittels des Spritzgießens des Verbindungskörpers ausgebildet wird.

Die erfindungsgemäße Hohlkörperverbindung ist besonders vorteilhaft zur Verwendung als Führungsrohr von Leitungen oder Schläuchen geeignet. Besonders bevorzugt wird die erfindungemäße Lösung als Führungsrohr an einem Spülkasten einer Toilettenspülung verwendet.

### Kurzbeschreibung der Zeichnungen

Nachfolgend wird ein Ausführungsbeispiel der erfindungsgemäßen Lösung anhand der beigefügten schematischen Zeichnungen näher erläutert. Es zeigt:

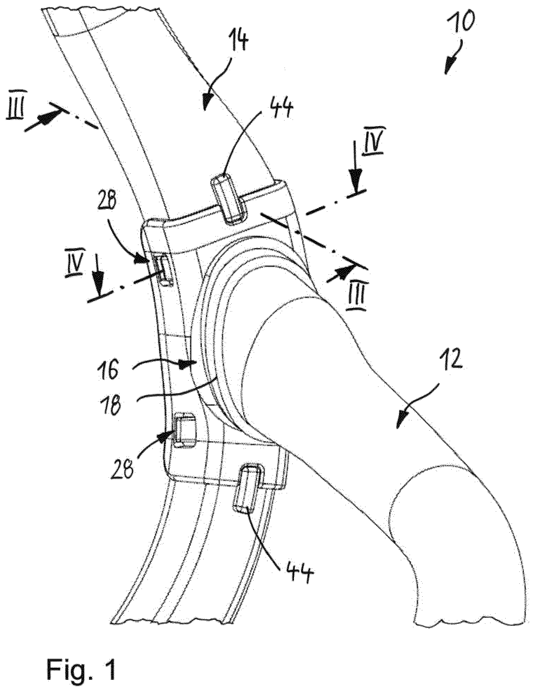

- Fig. 1: eine perspektivische Ansicht einer Hohlkörperverbindung gemäß der Erfindung mit einem ersten Hohlkörper, einem zweiten Hohlkörper und einem Verbindungskörper,

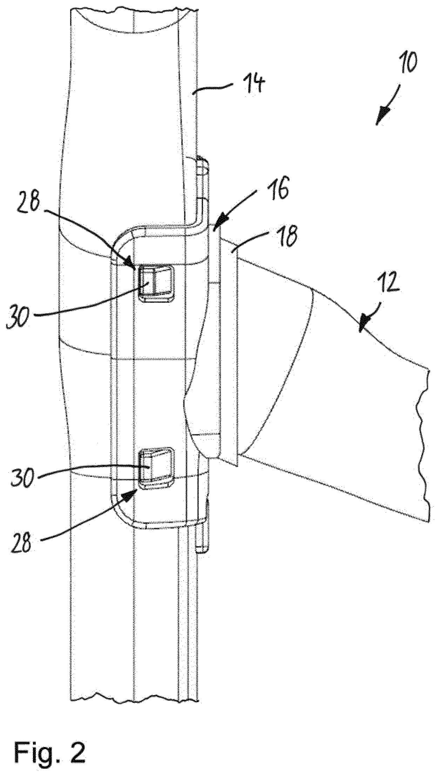

- Fig. 2: eine Seitenansicht der Hohlkörperverbindung gemäß Fig. 1,

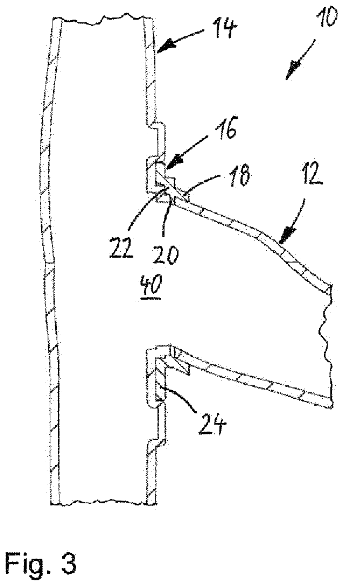

- Fig. 3: den Schnitt III - III gemäß Fig. 1,
- Fig. 4: den Schnitt IV - IV gemäß Fig. 1,
- Fig. 5: das Detail V gemäß Fig. 4 in vergrößertem Maßstab,

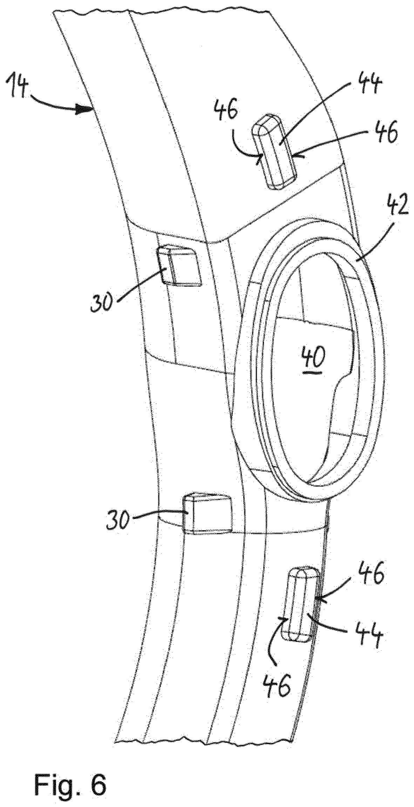

- Fig. 6: eine perspektivische Ansicht allein des ersten Hohlkörpers,

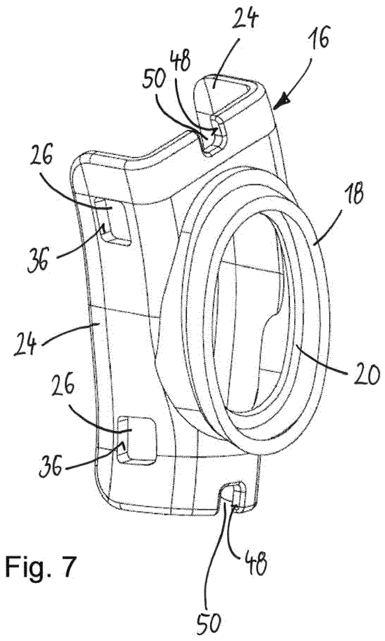

- Fig. 7: eine perspektivische Außenansicht allein des Verbindungskörpers und

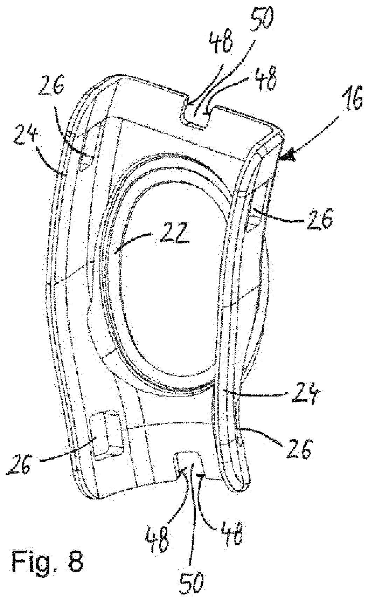

- Fig. 8: eine perspektivische Innenansicht allein des Verbindungskörpers.

### Detaillierte Beschreibung des Ausführungsbeispiels

In den Fig. ist eine Hohlkörperverbindung 10 dargestellt, die mit einem ersten Hohlkörper 12, einem zweiten Hohlkörper 14 und einem Verbindungskörper 16 gestaltet ist. Der erste Hohlkörper 12 und der zweite Hohlkörper 14 sind in jeweils einem Blasformverfahren als je ein blasgeformtes Rohr bzw. eine Röhre hergestellt worden. Dabei liegt der erste Hohlkörper 12 als ein Rohrende vor, welches in einem mittleren Abschnitt an den zweiten Hohlkörper 14 mündet. An dieser Mündung befindet sich der Verbindungskörper 16, mit dem die beiden Hohlkörper 12 und 14 miteinander verbunden sind, um eine Rohrabzweigung des ersten Hohlkörpers 12 vom zweiten Hohlkörper 14 herzustellen. Mit dem Verbindungskörper 16 ist auf kostengünstige Weise eine präzise und fluiddichte Verbindung zwischen den beiden blasgeformten Hohlkörpern 12 und 14 geschaffen.

Der, die beiden Hohlkörper 12 und 14 verbindende Verbindungskörper 16 ist als eine Art Ring bzw. Schelle ausgeformt. Dabei ist der Verbindungskörper 16 ringförmig um das Ende des ersten Hohlkörpers 12 herumgeformt und mit seiner Seitenfläche bzw. Stirnseite an dem zweiten Hohlkörper 14 seitlich an dessen Längsseite angelegt. Der Verbindungskörper 16 ist mittels eines Spritzgießverfahrens hergestellt worden. Dabei wurde er an dem ersten Hohlkörper 12 kraftschlüssig (Umschließen des ersten Hohlkörpers 12 beim Spritzgießen und Abkühlen) und auch stoffschlüssig (Verbinden und Verkleben der Materialien des Verbindungskörpers 16 und des ersten Hohlkörpers 12 beim Spritzgießen) angekoppelt. An dem zweiten Hohlkörper 14 wurde der Verbindungskörper formschlüssig angekoppelt.

Um die stoffschlüssige bzw. kraftschlüssige Verbindung zwischen dem ersten Hohlkörper 12 und dem Verbindungskörper 16 herzustellen, ist der Verbindungskörper 16 an den Endbereich des zuvor mittels Blasformen hergestellten ersten Hohlkörpers 12 mittels eines Spritzgießverfahrens angespritzt worden. Mit dem Anspritzen ist auf kostengünstige Weise eine dichte und in drei Dimensionen Kräfte übertragende Ankoppelung des Verbindungskörpers 16 an den blasgeformten ersten Hohlkörper 12 geschaffen. Am Anspritzbereich weist der Verbindungskörper 16 einen, das Ende des rohrförmigen ersten Hohlkörpers 12 außen umgreifenden Flanschabschnitt 18 auf. An diesen Flanschabschnitt 18 grenzt innenseitig ein sich radial nach innen in Form einer Ringscheibe abstehender Ringabschnitt 20, an dem das Ende des ersten Hohlkörpers axial anschlägt. Dieser Ringabschnitt 20 füllt den, durch Toleranzen gebildeten Spalt zwischen Verbindungskörper 16 und erstem Hohlkörper 12 sowie zweitem Hohlkörper 14 aus und bildet somit im montierten Zustand einen spaltfreien Übergang zwischen diesen Bauteilen. Angrenzend an diesen Ringabschnitt 20 weist der Verbindungskörper 16 einen Dichtabschnitt 22 auf, der sich als ringförmige Fläche in, im Querschnitt gestufter Form um den Ringabschnitt 20 herum vollumfänglich erstreckt. Der Dichtabschnitt 22 wird radial außen von einem Halteabschnitt 24 gefolgt, an dem insgesamt vier Laschen 26 von je einer zugehörigen Rastverbindung 28 ausgebildet sind. Die vier Laschen 26 sind je als eine Durchgangsöffnung bzw. durchgehende Aussparung in dem ansonsten flächigen und den zweiten Hohlkörper außenseitig, zu zwei gegenüberliegenden Seiten hin umgreifenden Halteabschnitt 24 ausgeformt. Sie sind an den Ecken des im Wesentlichen viereckigen Halteabschnitts 24 so ausgeformt, dass zwischen ihnen weite Abstände bestehen, um den zweiten Hohlkörper 14 weit außen federnd zu greifen.

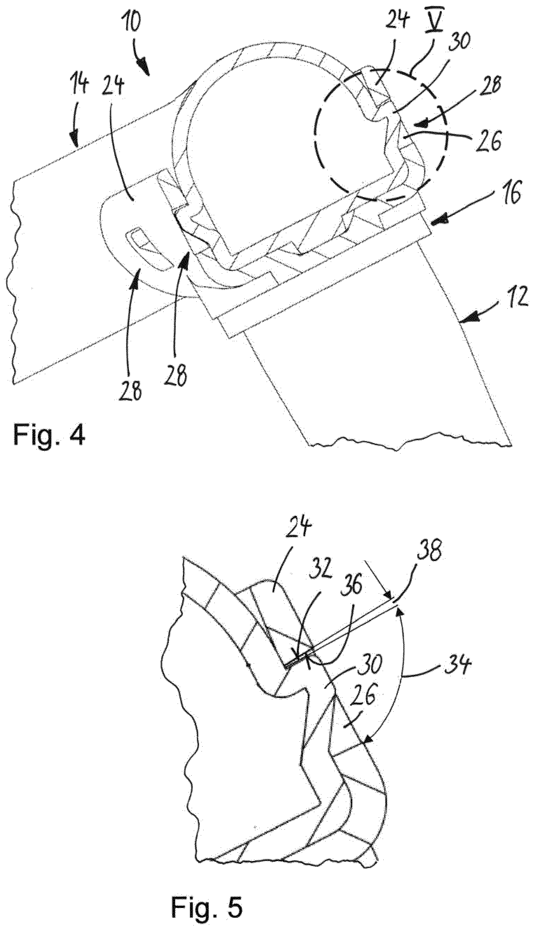

Am zweiten Hohlkörper 14 ist für die formschlüssige Verbindung zwischen dem zweiten Hohlkörper 14 und dem Verbindungskörper 16 an jeder der vier Rastverbindungen 28 eine Raste 30 ausgeformt. Die Rasten 30 werden beim Blasformen des zweiten Hohlkörpers 14 weitgehend kostenneutral und dennoch mit der erforderlichen Maßgenauigkeit hergestellt. Die Rasten 30 weisen je eine mit der zugehörigen Lasche 26 zusammenwirkende Rastfläche 32 auf, die zur Zugrichtung des Verbindungskörpers 16 am zweiten Hohlkörper 14 in einem Winkel 34 von ca. 90 ° steht. An der Rastfläche 32 greift die Lasche 26 mit einer Laschenfläche 36 an, die zu der Rastfläche 32 nochmals um einen weiteren Winkel 38 von zwischen 2 ° und 6 °, bevorzugt 4 ° schräg gestellt ist (siehe Fig. 5).

Zwischen den vier Rasten 30 befindet sich am zweiten Hohlkörper 14 eine leicht ovale Öffnung 40, um die herum ein ringförmiger, gegebenenfalls gestufter Dichtabschnitt 42 an dem zweiten Hohlkörper 14 ausgebildet ist. Auch diese Öffnung 40 mit ihrem Dichtabschnitt 42 wird beim Blasformen des zweiten Hohlkörpers 14 mit hergestellt. Alternativ kann sehr kostengünstig nur der Dichtabschnitt 42 beim Blasformen ausgeformt werden und die Öffnung 40 nachfolgend mittels Ausstanzung im zweiten Hohlkörper 14 ausgeformt werden. Der Dichtabschnitt 42 des zweiten Hohlkörpers 14 wirkt mit dem Dichtabschnitt 22 des Verbindungskörpers 16 derart zusammen, dass diese beiden Dichtabschnitte 22 und 42 flächig oder linienförmig aneinander angelegt werden und sich eine gegebenenfalls auch fluiddichte Abdichtung zwischen dem zweiten Hohlkörper 14 und dem Verbindungskörper 16 bildet. Dazu kann zumindest einer der beiden Dichtabschnitte 22 oder 42 oder beide Dichtabschnitte 22 und 42 mit einer Stufung ausgestaltet sein, so dass sich eine zusätzliche Labyrinthabdichtung bildet.

An dem zweiten Hohlkörper 14 sind ferner, in dessen Längsrichtung betrachtet, am oberen und unteren Ende des Halteabschnitts 24 des Verbindungskörpers 16 je an einem Nocken 44 seitlich von der Oberfläche des zweiten Hohlkörpers 14 im Wesentlichen senkrecht hochragende Anlageflächen 46 ausgebildet. An diesen Anlageflächen 46 liegt der Verbindungskörper 16 mit zugehörigen Anlageflächen 48 an, die in Ausformungen 50 im Halteabschnitt 24 vorgesehen sind. Die derart einander diametral gegenüberliegenden und aneinander anliegenden Anlageflächen 46 und 48 dienen zum Aufnehmen eines ,an dem ersten Hohlkörper 12 und damit am Verbindungskörper 16 gegenüber dem zweiten Hohlkörper 14 wirkenden Torsionsmoment.

### Bezugszeichenliste

- 10: Hohlkörperverbindung
- 12: erster Hohlkörper
- 14: zweiter Hohlkörper
- 16: Verbindungskörper
- 18: Flanschabschnitt des Verbindungskörpers
- 20: Ringabschnitt des Verbindungskörpers
- 22: Dichtabschnitt des Verbindungskörpers
- 24: Halteabschnitt des Verbindungskörpers
- 26: Lasche des Verbindungskörpers
- 28: Rastverbindung
- 30: Raste des zweiten Hohlkörpers
- 32: Rastfläche
- 34: Winkel der Rastfläche
- 36: Laschenfläche
- 38: Winkel der Laschenfläche
- 40: Öffnung im zweiten Hohlkörper
- 42: Dichtabschnitt des zweiten Hohlkörpers
- 44: Nocken des zweiten Hohlkörpers
- 46: Anlagefläche am Nocken
- 48: Anlagefläche am Halteabschnitt
- 50: Ausformung am Halteabschnitt

## Patentansprüche

1. Hohlkörperverbindung (10) mit einem ersten Hohlkörper (12), der mittels eines Blasformverfahrens hergestellt ist, und einem zweiten Hohlkörper (14), wobei ein die beiden Hohlkörper (12, 14) verbindender Verbindungskörper (16) vorgesehen ist, der mittels eines Spritzgießverfahrens hergestellt ist, der an dem ersten Hohlkörper (12) stoffschlüssig oder kraftschlüssig angekoppelt ist und der an dem zweiten Hohlkörper (14) formschlüssig angekoppelt ist, und wobei die formschlüssige Verbindung zwischen dem zweiten Hohlkörper (14) und dem Verbindungskörper (16) mittels einer Rastverbindung (28) hergestellt ist,
**dadurch gekennzeichnet, dass** der zweite Hohlkörper (14) ebenfalls mittels eines Blasformverfahrens hergestellt ist und die Rastverbindung (28) mit mindestens einer vom zweiten Hohlkörper (14) gebildeten Raste (30) und einer zugehörigen vom Verbindungskörper (16) gebildeten Lasche (26) gebildet ist.

2. Hohlkörperverbindung nach Anspruch 1,
**dadurch gekennzeichnet, dass** der erste und der zweite Hohlkörper (12, 14) jeweils als ein blasgeformtes Rohr hergestellt sind.

3. Hohlkörperverbindung nach Anspruch 2,
**dadurch gekennzeichnet, dass** mittels des Verbindungskörpers (16) der erste, rohrförmige Hohlkörper (12) mit seiner Stirnseite an der Längsseite des zweiten, rohrförmigen Hohlkörpers (14) angekoppelt ist.

4. Hohlkörperverbindung nach einem der Ansprüche 1 bis 3,
**dadurch gekennzeichnet, dass** die stoffschlüssige oder kraftschlüssige Verbindung zwischen dem ersten Hohlkörper (12) und dem Verbindungskörper (16) mittels eines Anspritzens des Verbindungskörpers (16) an den ersten Hohlkörper (12) hergestellt ist.

5. Hohlkörperverbindung nach einem der Ansprüche 1 bis 4,
**dadurch gekennzeichnet, dass** an dem zweiten Hohlkörper (14) mindestens eine erste Anlagefläche (46) und an dem Verbindungskörper (16) eine zugehörige zweite Anlagefläche (48) zum Aufnehmen eines an dem ersten Hohlkörper (12) wirkenden Torsionsmoments vorgesehen ist.

6. Verfahren zum Herstellen einer Hohlkörperverbindung (10) mit den Schritten:
Blasformen eines ersten Hohlkörpers (12),
Blasformen eines zweiten Hohlkörpers (14), sowie
Spritzgießen eines Verbindungskörpers (16) mit einem Ausbilden einer stoffschlüssigen oder kraftschlüssigen Verbindung zwischen dem ersten Hohlkörper (12) und dem Verbindungskörper (16) und
einem Ausbilden einer formschlüssigen Verbindung zwischen dem Verbindungskörper (16) samt daran gekoppeltem ersten Hohlkörper (12) und dem zweiten Hohlkörper (14),
wobei die formschlüssige Verbindung zwischen dem zweiten Hohlkörper (14) und
dem Verbindungskörper (16) mittels einer Rastverbindung (28) hergestellt wird,
von der eine Raste (30) mittels des Blasformens des zweiten Hohlkörpers (14) und
eine Lasche (26) mittels des Spritzgießens des Verbindungskörpers (16) ausgebildet wird.

7. Verfahren nach Anspruch 6,
**dadurch gekennzeichnet, dass** die stoffschlüssige oder kraftschlüssige Verbindung zwischen dem ersten Hohlkörper (12) und dem Verbindungskörper (16) mittels eines Anspritzens des Verbindungskörpers (16) an den ersten Hohlkörper (12) ausgebildet wird.

## Claims

1. Hollow body connection (10) having a first hollow body (12) which is produced by means of a blow moulding method, and a second hollow body (14), wherein a connecting body (16) is provided which connects the two hollow bodies (12, 14), which is produced by means of an injection moulding process, which is coupled to the first hollow body (12) in a material-fit or force-fit manner and which is coupled to the second hollow body (14) in a form-fit manner, and wherein the form-fit connection between the second hollow body (14) and the connecting body (16) is produced by means of a latching connection (28),
**characterised in that** the second hollow body (14) is likewise produced by means of a blow moulding method and the latching connection (28) is formed with at least one latch (30), formed by the second hollow body (14), and an associated tab (26) formed by the connecting body (16).

2. Hollow body connection according to Claim 1, **characterised in that** the first and the second hollow body (12, 14) are each produced as a blow moulded tube.

3. Hollow body connection according to Claim 2, **characterised in that** by means of the connecting body (16) the first, tubular hollow body (12) is coupled with its front side on the longitudinal side of the second, tubular hollow body (14).

4. Hollow body connection according to one of Claims 1 to 3, **characterised in that** the material-fit or force-fit connection between the first hollow body (12) and the connecting body (16) is produced by means of injection moulding of the connecting body (16) to the first hollow body (12).

5. Hollow body connection according to one of Claims 1 to 4, **characterised in that** on the second hollow body (14) at least one first contact surface (46) is provided and on the connecting body (16) an associated second contact surface (48) for taking up a torsional moment acting on the first hollow body (12) is provided.

6. Method for producing a hollow body connection (10) having the steps of:
blow moulding a first hollow body (12),
blow moulding a second hollow body (14), and
injection moulding a connecting body (16) with formation of a material-fit or force-fit connection between the first hollow body (12) and the connecting body (16) and
formation of a form-fit connection between the connecting body (16), together with first hollow body (12) coupled thereto, and the second hollow body (14),
wherein the form-fit connection between the second hollow body (14) and the connecting body (16) is produced by means of a latching connection (28), by which a latch (30) is formed by means of the blow moulding of the second hollow body (14) and
a tab (26) is formed by means of the injection moulding of the connecting body (16).

7. Method according to Claim 6,
**characterised in that** the material-fit or force-fit connection between the first hollow body (12) and the connecting body (16) is formed by means of injection moulding of the connecting body (16) to the first hollow body (12).

## Revendications

1. Liaison de corps creux (10) avec un premier corps creux (12) réalisé à l'aide d'un procédé de soufflage et avec un deuxième corps creux (14), un corps de liaison (16) reliant les deux corps creux (12, 14) étant prévu, celui-ci étant fabriqué à l'aide d'un procédé de moulage par injection et étant raccordé au premier corps creux (12) par complémentarité de matières ou par complémentarité de forces et étant raccordé au deuxième corps creux (14) par complémentarité de formes et la liaison réalisée par complémentarité de formes entre le deuxième corps creux (14) et le corps de liaison (16) étant réalisée au moyen d'une liaison d'encliquetage (28) ;
**caractérisée en ce que** le deuxième corps creux (14) est également réalisé à l'aide d'un procédé de soufflage et que la liaison d'encliquetage (28) est formée à l'aide d'au moins un cran d'arrêt (30) formé par le deuxième corps creux (14) et d'une bride (26) associée formée par le corps de liaison (16).

2. Liaison de corps creux selon la revendication 1, **caractérisée en ce que** le premier et le deuxième corps creux (12, 14) sont respectivement fabriqués sous la forme d'un tube formé par soufflage.

3. Liaison de corps creux selon la revendication 2, **caractérisée en ce que** le premier corps creux (12) en forme de tube est couplé avec son côté avant au niveau du côté longitudinal du deuxième corps creux (14) en forme de tube, à l'aide du corps de liaison (16).

4. Liaison de corps creux selon l'une quelconque des revendications 1 à 3, **caractérisée en ce que** la liaison réalisée par complémentarité de matières ou réalisée par complémentarité de forces entre le premier corps creux (12) et le corps de liaison (16) est réalisée par injection du corps de liaison (16) au niveau du premier corps creux (12).

5. Liaison de corps creux selon l'une quelconque des revendications 1 à 4, **caractérisée en ce qu'**au moins une première surface d'appui (46) est prévue au niveau du deuxième corps creux (14) et qu'une deuxième surface d'appui (48) associée est prévue au niveau du corps de liaison (16) pour absorber un couple de torsion agissant au niveau du premier corps creux (12).

6. Procédé d'établissement d'une liaison de corps creux (10) avec les étapes suivantes :
soufflage d'un premier corps creux (12) ;
soufflage d'un deuxième corps creux (14) ; ainsi que
moulage par injection d'un corps de liaison (16) par formation d'une liaison réalisée par complémentarité de matières ou réalisée par complémentarité de forces entre le premier corps creux (12) et le corps de liaison (16) ; et
par formation d'une liaison réalisée par complémentarité de formes entre le corps de liaison (16) avec l'ensemble du premier corps creux (12) y étant raccordé et le deuxième corps creux (14) ;
la liaison réalisée par complémentarité de formes entre le deuxième corps creux (14) et
le corps de liaison (16) étant réalisée au moyen d'une liaison d'encliquetage (28) à partir de laquelle un cran d'arrêt (30) est réalisé par soufflage du deuxième corps creux (14) et une bride (26) étant réalisée par moulage par injection du corps de liaison (16).

7. Procédé selon la revendication 6, **caractérisé en ce que** la liaison réalisée par complémentarité de matières ou réalisée par complémentarité de forces entre le premier corps creux (12) et le corps de liaison (16) est réalisée par injection du corps de liaison (16) au niveau du premier corps creux (12).
